# EUROPÄISCHE PATENTANMELDUNG

(11) **EP 1 555 442 A1**
(43) Veröffentlichungstag der Anmeldung: **20.07.2005**
(21) Anmeldenummer: 04029315.1
(22) Anmeldetag: 10.12.2004
(51) Int. Cl.: F16B 12/20

(54) **Verbindungsbeschlag für Hohlplatten**

(30) Priorität: 14.01.2004 DE 202004000473 U
(71) Anmelder: Häfele GmbH & Co. KG, 72202 Nagold (DE)
(72) Erfinder: Watz, Rüdiger, 72401 Haigerloch (DE); Sawatzki, Gerd, 15518 Rauen (DE)
(74) Vertreter: Kohler Schmid Möbus

(57) **Zusammenfassung**

Um bei einem Verbindungsbeschlag für Hohlplatten 12, 13 beim Einsetzen des Beschlages und beim Zusammenziehen der Hohlplatten 12 und 13 ein Ausbrechen der Deckplatten 14 zu verhindern, ist ein in einem Gehäuse 1 drehbar gelagertes Spannteil 2 vorgesehen, welches den Kopf 3 eines zugehörigen, an seinem freien Ende Gewinde 9 aufweisenden Anzugsbolzens 4 aufnimmt, wobei am Gehäuse 1 ein Führungsrohr 11 für einen verlängerten Anzugsbolzen 4 befestigt ist.

## Beschreibung

Die Erfindung bezieht sich auf einen Verbindungsbeschlag für Hohlplatten, insbesondere Wabenplatten, Sandwichplatten oder dergleichen. Derartige Platten bestehen aus zwei relativ dünnen, jedoch festen Deckplatten, wobei der Hohlraum zwischen diesen mit Wellpappe oder ähnlichem Material ausgefüllt ist. Während Beschläge bei massiven Platten in Bohrungen derselben eingelassen oder in einfacher Weise angeschraubt werden können, finden die Beschläge oder Schrauben bei Hohlplatten keinen Halt innerhalb der Hohlräume, so dass man sich bei der Befestigung auf die Deckplatten beschränken muss. Da diese jedoch relativ dünn sind, müssen besondere Vorkehrungen getroffen werden, um ein Ausbrechen dieser Deckplatten zu verhindern.

Bei einem Verbindungsbeschlag mit einem in einem Gehäuse drehbar gelagerten Spannteil, welches den Kopf eines zugehörigen, an seinem freien Ende Gewinde aufweisenden Anzugsbolzens aufnimmt, wird dies erfindungsgemäss dadurch erreicht, dass am Gehäuse ein Führungsrohr für einen verlängerten Anzugsbolzen befestigt ist. Auf diese Weise wird die Ausnehmung in der Deckplatte für das Gehäuse vom Rand derselben zurückverlegt, sodass die Gefahr eines Ausreissens der Ausnehmung am Rand der Deckplatte damit ausgeschlossen wird. Das Führungsrohr sorgt dabei für eine einwandfreie Führung und Abstützung für den Anzugsbolzen, sodass er ohne Schwierigkeiten in die entsprechende Bohrung der zu verbindenden Hohlplatte eingeführt werden kann.

Vorzugsweise besteht zur Vereinfachung der Fertigung das Führungsrohr aus einem Stück mit dem Gehäuse. Um die Verbindung des Beschlages mit der Hohlplatte noch weiter zu verstärken, ist nach einem weiteren Merkmal der Erfindung am freien Ende des Führungsrohrs ein mit einem Durchtritt für den Anzugsbolzen versehenes, in einer zweiten Ausnehmung der Hohlplatte eingelassenes Stützgehäuse angeordnet. Es ist zweckmässig, bei dieser Ausführungsform das Gehäuse mit dem Stützgehäuse durch eine oberhalb der Deckplatte liegende Befestigungsplatte zu verbinden. Zur weiteren Verstärkung der Hohlplatte im Bereich der Ausnehmungen weist das Rohr senkrecht zur Hohlplatte liegende Längsstege auf, welche an den beiden Deckplatten der Hohlplatten anliegen.

Die Zeichnung zeigt Ausführungsbeispiele der Erfindung. Es stellen dar:

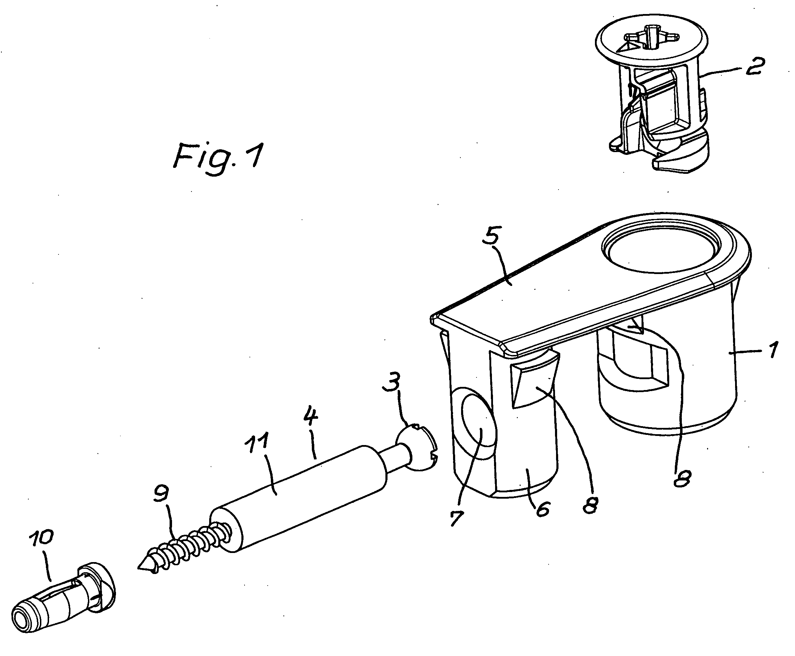

- Figur 1: ein perspektivische Explosionszeichnung eines Verbindungsbeschlages,
- Figur 2: eine Darstellung nach Fig. 1 im montierten Zustand,
- Figur 3: zwei zu verbindende Wabenplatten mit einem Verbindungsbeschlag nach Fig.1,
- Figur 4: eine Darstellung nach Fig. 3 mit einem anderen Verbindungsbeschlag.
- Figur 5: eine Darstellung nach Fig. 3 mit einem weiteren Verbindungsbeschlag.

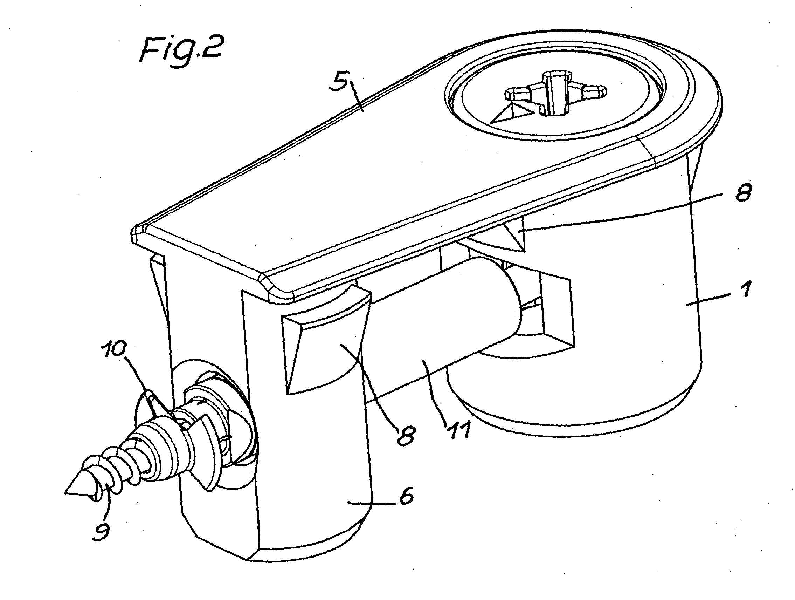

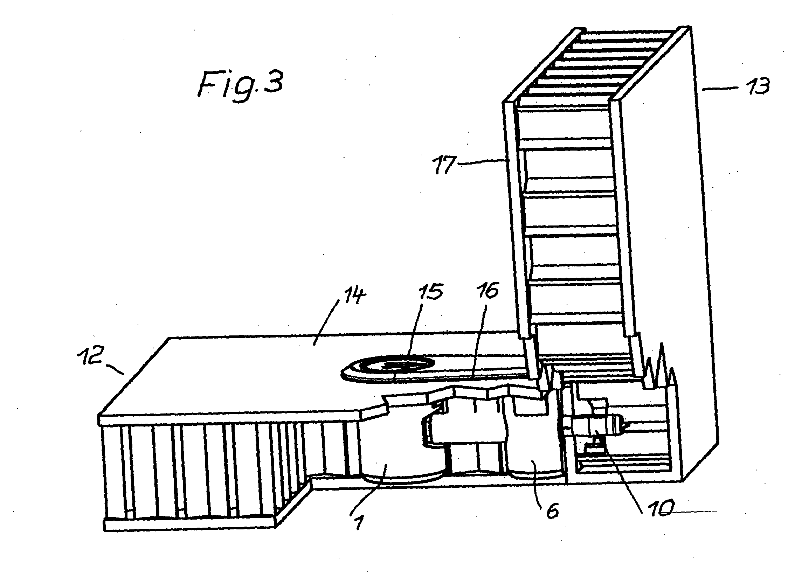

Der Verbindungsbeschlag weist ein Gehäuse 1 mit einem darin drehbar gelagerten Spannteil 2 für den Kopf 3 eines Anzugsbolzens 4 auf. Außerdem ist das Gehäuse 1 über eine Platte 5 mit einem Stützgehäuse 6 verbunden. Das Stützgehäuse 6 weist dabei einen Durchtritt 7 für den Anzugsbolzen 4 auf. Außerdem sind an beiden Gehäusen 1,6 widerhakenförmige, elastisch schwenkbare Flügel 8 vorgesehen, welche zur Abstützung an der Deckplatte 14 einer Wabenplatte 12 (Fig.3) dienen. Das freie Ende des Anzugsbolzens 4 ist mit Gewinde 9 versehen, welches in eine Spreizmuffe 10 eingreift. In Fig. 2 sind die einzelnen Teile zusammengefügt und die Spreizmuffe 10 ist gefaltet. Das Gehäuse 1 und das Stützgehäuse 6 sind dabei zusätzlich durch ein auf dem Anzugsbolzen 4 sitzendes Führungsrohr 11 verbunden.

In Fig. 3 sind zwei Wabenplatten 12 und 13 mittels des erfindungsgemäßen Verbindungsbeschlages aneinander befestigt. Dabei sind in der Deckplatte 14 der Wabenplatte 12 Ausnehmungen 15 und 16 für das Gehäuse 1 und das Stützgehäuse 6 vorgesehen. Die gefaltete Spreizmuffe 10 liegt auseinandergefaltet innen an der Deckplatte 17 der Wabenplatte 13 an. Durch den großen Abstand des Gehäuses 1 mit dem Spannglied 2 von der freien Kante der Deckplatte 14 ist ein Ausreißen derselben praktisch ausgeschlossen, wobei hierzu zusätzlich das Stützgehäuse 6 und vor allem auch die Platte 5 beitragen.

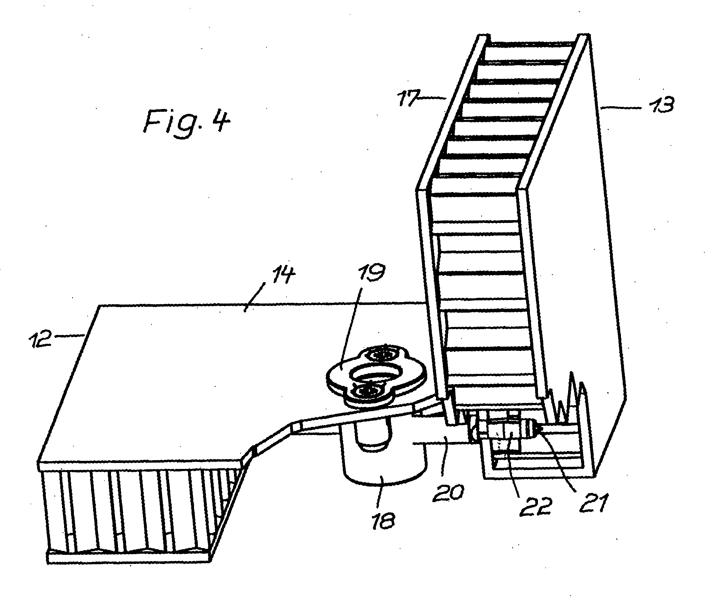

In Fig. 4 ist ein anderes Ausführungsbeispiel dargestellt, bei welchem auf das Stützgehäuse 6 verzichtet wurde und nur ein Gehäuse 18 mit aus der Zeichnung nicht erkennbarem Spannglied vorgesehen ist. Dieses Gehäuse 18 ist oberhalb der Deckplatte 14 der Wabenplatte 12 mittels eines Flanschs 19 befestigt. Um auch hier einen möglichst großen Abstand von der Endkante der Deckplatte 14 zu erreichen, ist ebenfalls ein Führungsrohr 20 für einen Anzugsbolzen 21 vorgesehen, welcher wiederum mittels einer Spreizmuffe 22 innen an der Deckplatte 17 der Wabenplatte 13 festgelegt ist.

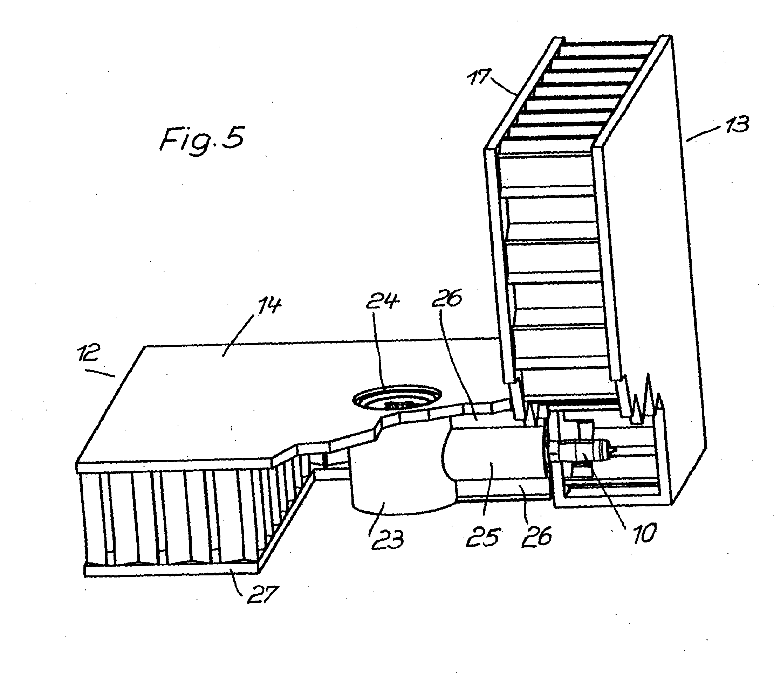

Das Gehäuse 23 nach Fig.5 ist ohne Befestigungsplatte in eine Ausnehmung 24 der Deckplatte 14 der Wabenplatte 12 eingesetzt. Um trotzdem eine feste Verbindung zu erreichen, weist das Führungsrohr 25 zusätzlich senkrecht zur Wabenplatte 12 liegende Längsstege 26 aufweist, welche an den beiden Deckplatten 14 und 27 der Wabenplatte 12 anliegen.

## Patentansprüche

1. Verbindungsbeschlag für Hohlplatten, insbesondere Wabenplatten, Sandwichplatten odgl. mit einem in einem Gehäuse (1) drehbar gelagerten Spannteil (2), welches den Kopf (3) eines zugehörigen, an seinem freien Ende Gewinde (9) aufweisenden Anzugsbolzens (4) aufnimmt, **dadurch gekennzeichnet, dass** am Gehäuse (1) ein Führungsrohr (11) für einen verlängerten Anzugsbolzen (4) befestigt ist.

2. Verbindungsbeschlag nach Anspruch 1, **dadurch gekennzeichnet, dass** das Führungsrohr (11) aus einem Stück mit dem Gehäuse (1) besteht.

3. Verbindungsbeschlag nach einem oder beiden der Ansprüche 1 und 2, **dadurch gekennzeichnet, dass** am freien Ende des Führungsrohrs (11) ein mit einem Durchtritt (7) für den Anzugsbolzen (4) versehenes in einer Ausnehmung (15) der Hohlplatte (12) eingelassenes Stützgehäuse (6) angeordnet ist.

4. Verbindungsbeschlag nach Anspruch 3, **dadurch gekennzeichnet, dass** das Gehäuse (1) mit dem Stützgehäuse (6) durch eine oberhalb der Hohlplatte (12) liegende Befestigungsplatte (5) verbunden ist.

5. Verbindungsbeschlag nach einem oder mehreren der vorhergehenden Ansprüche, **dadurch gekennzeichnet, dass** das Führungsrohr (25) senkrecht zur Hohlplatte (12) liegende Längsstege (26) aufweist, welche an den beiden Deckplatten (14,27) der Hohlplatte (12) anliegen.
